# EUROPEAN PATENT APPLICATION

(11) **EP 1 462 918 A1**
(43) Date of publication of application: **29.09.2004**
(21) Application number: 03078926.7
(22) Date of filing: 11.12.2003
(51) Int. Cl.: G06F 3/033

(54) **Method and computer system for displaying data at a graphical interface**

(30) Priority: 24.03.2003 US 457549; 16.05.2003 US 471410
(71) Applicant: SAP AG, 69190 Walldorf (DE)
(72) Inventor: Beringer, Joerg, 60431 Frankfurt (DE); Hatscher, Michael, 49080 Osnabrück (DE); Sengupta, Rituparna, 69190 Walldorf (DE); Henke, Andreas, 69226 Nussloch (DE); Holz (née Wagner), Sabine, 69469 Weinheim (DE)
(74) Representative: Prins, Adrianus Willem, Mr. Ir.

(57) **Abstract**

A method of displaying data at a graphical interface (200). The method comprises: displaying a table pattern (100) of original cells (130) at the graphical interface (200); and
in response to selecting at least one of the original cells (130): expanding said table pattern (100) with at least one additional cell and displaying data related to at least one of said selected original cells (130) in at least one of said additional cells.

## Description

### BACKGROUND

The invention relates to a method for displaying data at a graphical interface. The invention further relates to a computer system with a graphical interface and to a computer program product.

It is known in the art to represent data in a computer system, by displaying the data in a window of a graphical interface, such as for example a monitor or liquid crystal display panel, as a table pattern comprising a number of cells.

However, a drawback of this known method is that it has a low ease of use. If a user requires additional information about data in one or more of the cells, the user has to open a separate window in the graphical interface in which the additional information is presented, or perform a system-supported drill down replacing the entire table by a more detailed table. This distracts the users attention from the window in which the table is present, which is confusing to the user.

It is an object of the invention to provide a method with an increased ease of use.

The invention therefore provides a method according to claim 1.

The ease of use is increased, because in response to selecting at least one of the original cells, the table pattern is expanded with at least one additional cell and data related to at least one of said selected original cells is displayed in at least one of said additional cells. Accordingly, the attention of the user is not distracted from the currently selected table. A further advantage is that the additional data cannot obscure data in the original cells of the table, which further enhances the ease of use.

In an embodiment, after expanding the data in an additional cell is controlled by selecting an original cell. This further increases the ease of use, because the table is turned into a tabbed control without distracting the users attention.

The invention further provides a computer system according to claim 9. Such a computer system has an increased ease of use, because the processor is capable of displaying a table pattern of original cells in a display area of the graphical interface; and capable of expanding, in response to selecting at least one of said original cells, the table pattern with at least one additional cell and displaying data related to the selected cells in at least one of said additional cells. Accordingly, the attention of the user is not distracted from the table, and the ease of use is increased. Furthermore, the additional data cannot obscure data in the original cells of the table, which further enhances the ease of use.

The invention also provides a computer program product according to claim 10. Such a computer program product can increase the ease of use of a programmable apparatus because the attention of the user is not distracted from the table when the program is run on the programmable apparatus, and accordingly the ease of use is increased. A further advantage is that the additional data does not obscure data in the original cells of the table, which further enhances the ease of use.

Specific embodiments of the invention are set forth in the dependent claims. Further details, aspects and embodiments of the invention will be described with reference to the attached drawings.

### DESCRIPTION OF THE DRAWINGS

Figure 1 is a first exemplary display window showing a dashboard display having cell tabs.
Figure 2 is a second exemplary display window showing a dashboard display having cell tabs.
Figure 3 is a third exemplary display window showing a dashboard display having cell tabs.
Figure 4 is a fourth exemplary display window showing a dashboard display having cell tabs.
Figure 5 is a fifth exemplary display window showing a dashboard display having cell tabs.
Figure 6 is a sixth exemplary display window showing a dashboard display having cell tabs.
Figure 7 shows an example of an example of an embodiment of a computer system according to the invention

### DESCRIPTION

The description contained herein presents implementations in which information is passed between a user and a user device, e.g., a computer system, using conventional means such as a keyboard, a mouse, a physical transducer (e.g., a microphone), etc. However, other mechanisms may be used to pass information between a user and a computer system.

Certain terms used throughout this specification and claims, although originating in the context of conventional visual displays, are intended to include corresponding functions in the context of other types of information delivery. For example, "window" refers to any set of information available for presentation to a user. A window can include information displayed in a portion of a visual computer display. However, a window can also encompass the entire visual computer display.

A typical display window on a user device may include one or more "active" regions. The active regions are associated with instructions to be executed upon the occurrence of an event within the active region. For example, instructions associated with an active region may cause a jump to a specified location (e.g., a hyperlink to a website) upon the occurrence of a mouse-click within the active region. Other events can also cause the execution of instructions. In particular, a detected movement of a mouse and/or an entry of a mouse pointer into an active region (in either case, with or without a click of a mouse button) also are events that may be used to trigger the execution of instructions associated with that region.

The display window on a user device may include a "desktop", which refers to a graphical work surface analogous to a surface of a desk. Similarly, windows overlaying the desktop in the graphical user interface are analogous to papers or files laying on top of a desk. In some cases the desktop window, or an additional window(s), may include icon(s) that represent a program, a file, a resource, etc., available to the user. As such, the desktop acts as a launching point for running application programs, opening documents or files, displaying menus, and/or initiating operating system services, and the like.

Conventional work systems do not allow a user to easily associate objects and/or data that are required to complete a task.

User Interface (UI) patterns may be used to display elements with which a user may interact to cause the performance of corresponding actions defined by one or more User Action (UA) pattern(s). UA patterns may be established by performing pattern classification, e.g., mapping a set of User Actions to a corresponding set of User Interface (UI) patterns. The UI patterns allow a user to readily observe the User Actions required to complete a business or process workflow, for example. In some implementations, UA patterns may be organized as a hierarchy of tasks where each UA pattern class builds on the patterns of a lower level. User Action patterns may be established based upon observation levels associated with a user, and/or an analysis of a user's activities.

User Interface patterns mapped to User Action patterns may allow a user to easily create and/or observe a workflow or business process. For example, allowing a user to select objects and data that will be used to complete a task. The UA pattern created may be displayed as a UI Pattern and may be copied from one display area to another, allowing a user to create a UA that is transportable and associated with a user, or a user's assigned role/task. In one implementation a UI may be displayed as a Dashboard display. Selecting a cell tab entry within the Dashboard display causes additional information to be displayed, e.g., by causing an expansion of the selected cell tab that includes an additional display of information. Selecting a displayed value (e.g., an icon located within a cell tab) may also cause an expansion of the dashboard table to allow for interaction by a user to make additional selections in the expanded table.

User Action patterns may be used to describe levels of observation and analysis of a user's activities. User Interface (UI) patterns may be used to display elements with which a user may interact to cause the performance of corresponding actions defined by one or more UA pattern(s). A class of UI patterns may contain elements that correspond to elements in a UA pattern, for example, a UI pattern having a level of "page" may correspond to a UA pattern level of "Activity" (e.g., a task, or user intent).

User Action patterns may be organized as a hierarchy of tasks, for example, where each UA pattern class builds on the patterns of a lower level. The UA pattern levels may each contain work entities using different levels of granularity, from simple coherent work items to complex business scenarios.

User Interface (UI) patterns may be organized as a hierarchy of interface elements, comparable to the task hierarchy within a UA pattern. In this case, a higher-level UI pattern uses lower-level UI patterns as building blocks, therefore a consistency of interaction and visual appearance can be ensured between corresponding UI and UA patterns.

Page patterns, e.g., display screen layouts, may be used as a set of UI patterns that are organized to facilitate user activity(s).

Component patterns may be used to represent sub-areas of a display page that are used to describe specific tasks within a larger workflow process or an optional functionality. Component patterns may be used to represent a composite control object that supports an action step.

A dashboard display pattern (e.g, displaying one or more component patterns) may be used to provide an overview on the status of work items and/or processes. In this implementation, important values may be shown in a relatively dense format, for example, displayed in a table using icons. In one implementation, if a Dashboard display, or display component, is reduced in size a header area may be displayed to provide the most critical information representing the Dashboard area in an aggregated form.

A dashboard display pattern may be used to provide an overview on the status of work items and/or processes. In this implementation, values may be shown in a relatively dense format, for example, displayed in a table using icons. Selecting a displayed value (e.g., an icon) will cause an expansion of the dashboard table to allow for rapid direct action by a user to make additional selections in the expanded table.

In one implementation additional information on a dashboard entry may be obtained by clicking on a tabular entry (a "cell tab"), causing an expansion of the selected cell tab that includes an additional display of information. Selecting a displayed value (e.g., an icon located within a cell tab) may also cause an expansion of the dashboard table to allow for interaction by a user to make additional selections in the expanded table.

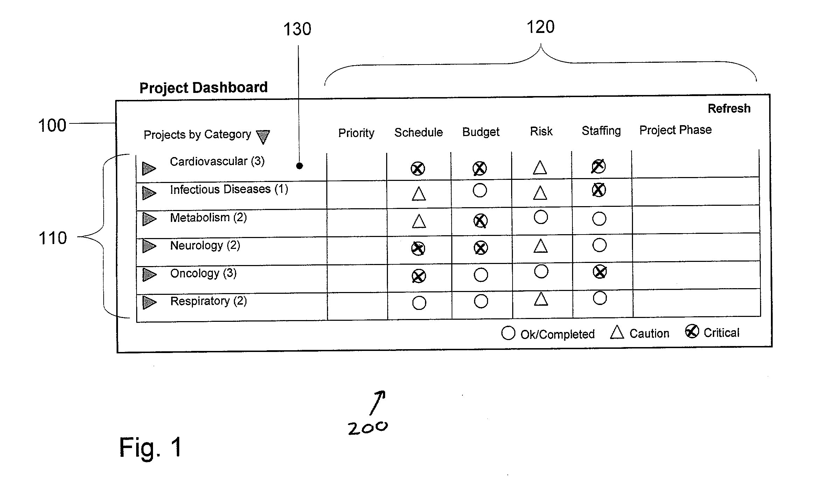

In Figures 1-6, a graphical interface 200 is shown in different stages of an example of a method for displaying data. The graphical interface 200 comprises a table pattern 100 with a number of cells. From hereon the table pattern is also referred to as a dashboard pattern 100, and the cells are also referred to as cell tabs. The cell tabs are arranged in rows 110 and columns 120.

In the cell tabs, data related to objects 301-303 stored in a database 30 are displayed. In the example, data related to current projects in a company is displayed in the cell tabs. In this example, the projects are research programs for certain medicines. However, the data may likewise relate to other matter, and for example relate to the operation of production lines in a manufacturing facility or otherwise.

In the example, initially, identifiers for one or more of the objects are displayed in the cells in the most left hand column. In the example of Fig. 1, identifiers for a groups of specific projects are shown, and the number of projects in the group is displayed as well. E.g. the group 'cardiovascular' is shown to comprise three projects, the group 'infectious diseases' is shown to comprise one project, and for the group 'metabolism' two projects are indicated to be in the group, etc.

In the cells of the columns right of the most left-hand column, values of properties of the objects identified in the most left-hand column are shown. In this example, status indicators are shown which indicate the status of the group of projects as a whole, for different aspects of the group, such as the budget, the amount of staff working on the project, the schedule, etc.. The status or the respective aspect is indicated by means of a geometric shape. An open circular shape indicates that the status is o.k., a triangular shape that the status of the respective aspect requires attention, and a crossed circular shapes indicates that the status of the respective aspect is critical.

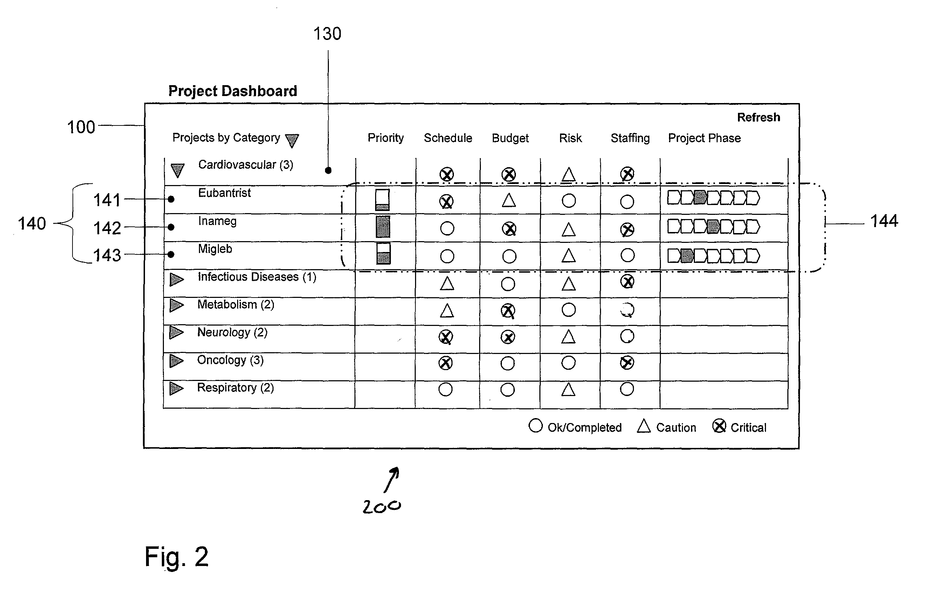

In the GUI 200, one or more of the cell tabs within the dashboard pattern 100 are provided with a control which can be selected. In response to selection of a control, additional data is displayed in the graphical interface 200. For example, a cell tab may represent an active area that when selected by a user, for example by clicking with a mouse on the cell tab, causes a change of displayed information. In response to selecting a cell tab, the table is then expanded with one or more additional cells in which further data is displayed, as is shown in Fig. 2 for instance.

As shown in Figs. 1 and 2, a first cell tab 130 represents a first category of information. When cell tab 130 is selected by a user a second display area 140 is shown that includes sub-categories of information 141-143 and associated cell tabs 144.

In the example of Fig. 1, the cell tabs in the left-hand column are provided with a triangular control which can be selected by a user. In response to the selection, the table pattern 100 is expanded with one or more rows 141-144. In Fig. 2, the dashboard pattern is shown after selection of the control in the cell tab 130 with the identifier 'Cardiovascular'.

As shown in Fig, 2, in this example in the most left-hand column, rows 141-143 are added below the selected cell 130. In the left-hand cells of the rows 141-143, identifiers of objects which are associated with the object identified in the selected cell 130 are displayed, e.g. the specific projects in the group identified in the selected cell 130. Thus, in response to selection of the control coupled to the identifier for a group or class of objects in the database 30, identifiers for specific objects in that group are displayed.

In this example, the group identified in the selected cell 130 is those of cardiovascular medicines, and in the added cells the names of specific medicines under research are shown, e.g. 'Eubantrist', 'Inameg' and 'Migleb'. At the right in the added rows 141-143, cells 144 are present in which values of aspects of the added objects are displayed, such as the budget of a specific project, the schedule or otherwise.

In this example, the status of the respective aspect is displayed in the respective cells 144. For instance, in the cells in the column 'priority', the urgency of the project is represented graphically as the shaded area of a rectangular shape. If the rectangle is completely shaded, the respective project has a high priority, and if the rectangle has no shaded area, the priority is low.

The status of the aspects 'schedule', 'budget', 'risk' and 'staffing' of the project is indicated by means of a geometric shape. A circular shape indicates that the status is o.k., a triangular shape that the status of the respective aspect requires attention, and a crossed circular shapes indicates that the status of the respective aspect is critical. In the added cells 144 in the column most right in the table 100, a project progress indicator is shown, which visually displays the phase in which the project is present at the moment, as well as an indication whether or not the phase is o.k. or further attention is required, and how many phases are still due.

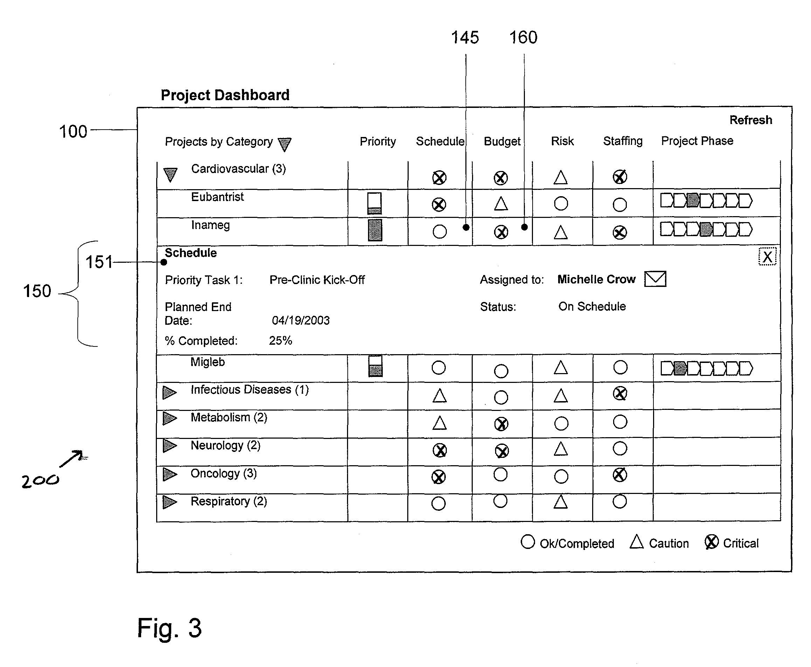

The added cells 141-144 may in turn be provided with controls as well, and be selected. In response to this selection, further additional cells 150 are added to the table, as is show in Figs. 3-5 for example. In the further additional cells, further data related to data in the cells already present in the table is displayed. In the example of Figs. 1-6, in the further additional cells 150, data is displayed which is retrieved from the database 30 and which is related to a specific aspect of an object identified in the added cells 141-143.

As shown in Fig. 3, a selection of cell tab 145 causes the display of additional information 151 in display area 150 (in this case, display area 150 is shown over dashboard display 100, although this display area may be displayed elsewhere on a display device.) In this example, additional information 151 corresponds to a sub-set of information related to sub-category 142.

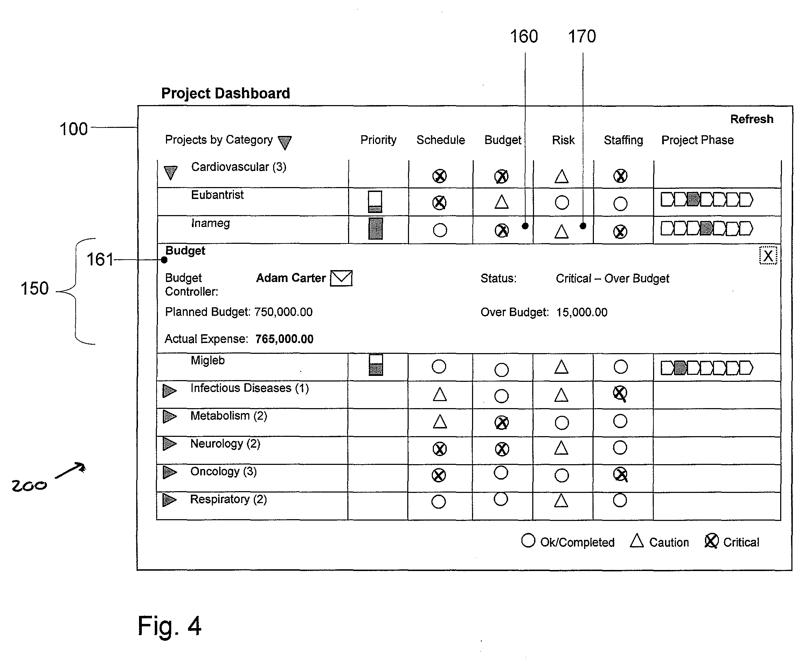

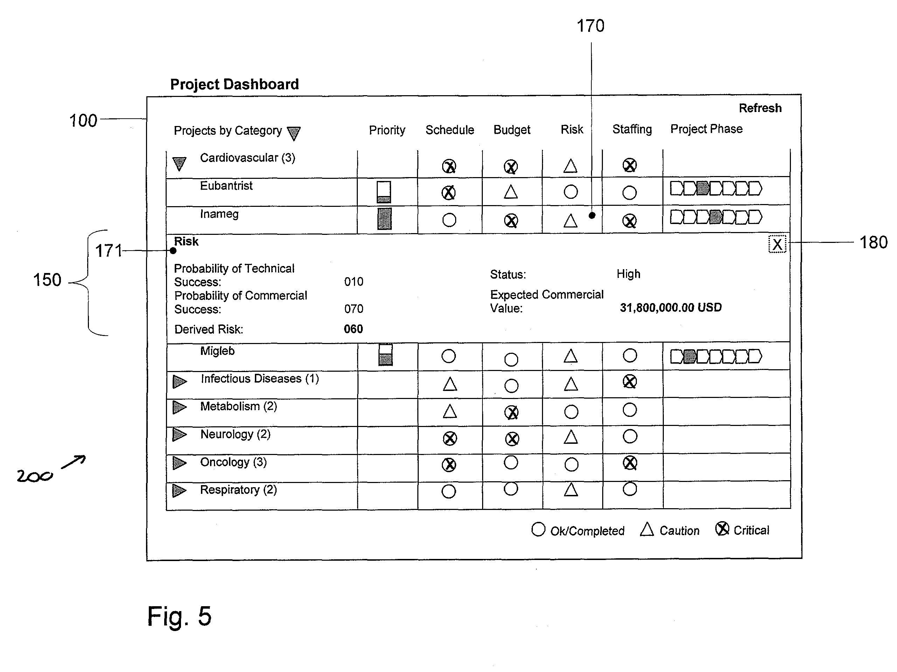

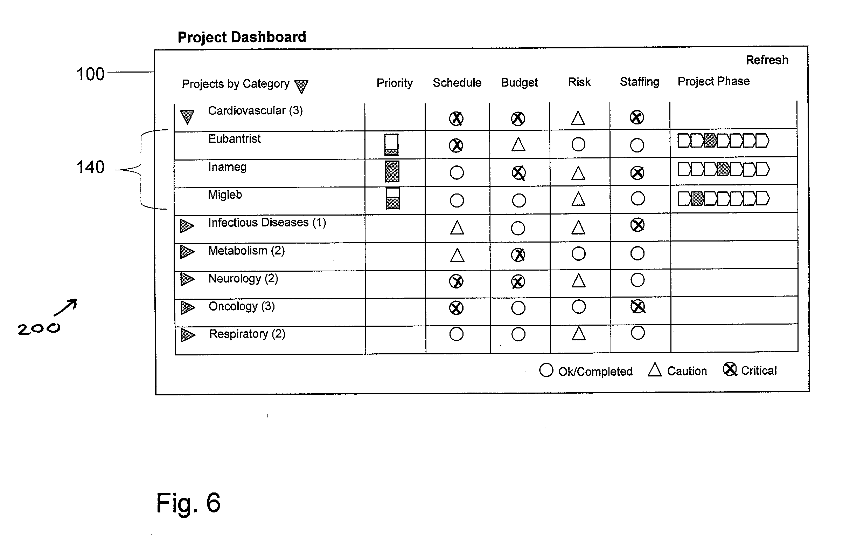

As shown in Fig. 4, a selection of cell tab 160 causes the display of additional information 161 in display area 150. In this example, additional information 161 corresponds to a sub-set of information related to sub-category 142. As shown in Fig. 5, a selection of cell tab 170 causes the display of additional information 171 in third display area 150. In this example, additional information 171 corresponds to a sub-set of information related to sub-category 142. As shown in Fig. 6, a selection of exit icon 180 causes the closing of the display area 150.

In Fig. 3, for instance, a cell 145 which indicates the status of a project has been selected via a suitable control. The cell 145 is selected by clicking on the cell 145 with a mouse pointer. In response to this selection, a cell 150 is added to the table 100. The cell 150 is added directly below the selected cell 145 and extends over the whole width of the table 100. The cell 150 may thus be regarded as a row comprising a single cell, and may also be regarded as a pop-in menu, e.g. a sub-screen that appears in-place and is embedded in the table pattern 100.

In the cell 150, further data 151 related to the data in the cell 145 is displayed. In this example, the column in which the selected cell 145 is present, determines the type of data in the additional cell, and the row of the selected cell 145 determines the actual data in the additional cell 150.

The cell 150 has a control by means of which another application can be opened which is related to the data in the cell 150. The cell 150 is further provided with a close-control X by means of which the added cell 150 can be removed, and be brought back into the previous state, as shown in Fig. 6.

In the example, after expanding the table pattern 100 by adding the additional cell 150, the cell 145 (which has been selected) operates are a selected a tab and the cells horizontally adjacent to the cell 145 function as non-selected tabs in a tab control. By selected one of those other cells, either the content of the additional cell 150 is replaced (similar to a tab-control) or is stacked with content corresponding to further selected cell.

In Fig. 3, the selected project is the research program for the medicine named Inameg, and a control coupled to a cell 145 in which data about the schedule of the project is displayed has been selected. The further added cell 150 is added in response to this selection, and further data 151 about the schedule is displayed, such as the responsible employee, the planned date for finishing the project, the percentage of completion, etc.

In Figs. 4 and 5, cells 160 resp. 170 have been selected , in which the status of the project budget resp. the risk of the project is displayed. In response to this selection, cells giving additional information about the budget and risk are added to the table 100.

The methods and/or processes described above may be implemented on a computer system. As used herein, the term "computer system" refers to a physical machine having one or more processing elements and one or more storage elements in communication with the one or more of the processing elements. Each of the various user devices and computers described herein include an operating system. The operating system is software that controls the computer system's operation and the allocation of resources. The term "process" or "program" refers to software, for example an application program that may be executed on a computer system. The application program is the set of executable instructions that performs a task desired by the user, using computer resources made available through the operating system.

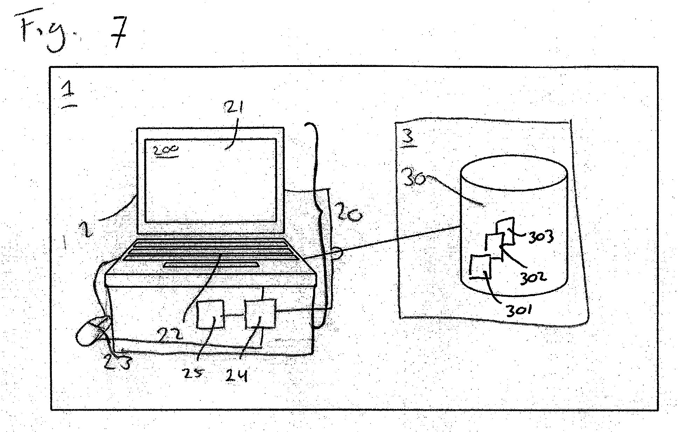

Fig. 7 shows an example of a computer system 1 which comprises a computer device 2. The computer system 1 further comprises a server system 3 with a database 30 In the example of fig. 7, the computer device 2 is communicatively connected to the server system 3 and the database 30 therein. The computer system may likewise be a stand-alone system and/or be connected to other resources than the database. For instance, the database 30 may be a part of the computer device 2 and be positioned inside the computer device 2 instead of the server system 3 or the computer device 2 may be connected to a computerized enterprise management system, such as is sold by SAP AG of Walldorf, Germany. It should be noted that a computer system comprises any suitable programmable apparatus, such as a portable digital assistant (PDA), a mobile telephone, a notebook computer or otherwise, in any suitable configuration such as a single stand alone device, two or more devices arranged in a data communications network, or otherwise.

The example of a computer device 2 is provided with a user-interface (UI) 20. The user-interface 20 comprises an input interface at which the user can input data into the computer device 2, e.g. by means of a keyboard 22 and a mouse 23. The computer device 2 further comprises an output interface at which data can be outputted in a for humans perceptible form to a user. In this example, the output interface comprises a monitor 21 by means of which data can be outputted visually in a graphical user interface (GUI) 200.

Both the output interface and the input interface may comprise other components than those depicted in figure 7, such as an electronic writing pad, acoustic output or input devices or otherwise. Furthermore the input and output interface may at least partially be integrated in the same device, such as in a touch screen or otherwise.

In the example computer system of fig. 7, actions performed by a user by means of the keyboard 22 and mouse 23 are graphically represented at the GUI 200 by the computer system 1. Thus, in this example, when actions are said to be performed by an user at the GUI 200, the actions are performed by means of the keyboard 22 and mouse 23, but graphically represented at the GUI 200. However, as mentioned, it is likewise possible to combine the GUI 200 and the input interface. In such a combined GUI and input interface, actions said to be performed by an user at the GUI are both represented and performed at the GUI.

In the example shown in fig. 7, the computer system 2 further comprises a processor 24 which is communicatively connected to the monitor 21, the keyboard 22, the mouse 23 and a memory 25, as is indicated with the lines in fig. 7. The processor 24 is, inter alia, arranged to handle input from the input interface, and to provide the monitor 21 with data which is to outputted at the GUI 200. The processor 24 may be arranged to perform other operations as well, such as routing received or outputted data to other devices, manipulating data or otherwise.

A computer program may be run on the computer system 1. When the computer program is running on the computer system 1, the processor 24 performs instructions according to program code stored in the memory 25. The computer program may, for example, be a program for storing, categorising and/or ordering items in the database 30 or may, for example, be a web-browser program which allows access to resources, such as applications, data and services of a computerised enterprise management system, such as is sold by SAP AG of Walldorf, Germany or otherwise.

At the GUI 200, information about objects present in the database 30 can be represented through execution of suitable instructions from a computer program by the processor 24. A table comprising cells in which aspects of the objects in the database 30 are shown can be displayed at the GUI 200 by implementing the GUI 200 and providing a program which enables the processor 24 to perform the method illustrated in figures 1-6, such as in the examples of Figs. 1-6.

Where appropriate, aspects of a systems according to the invention can be implemented in a computer program product tangibly embodied in a machine-readable storage device for execution by a programmable processor, and method steps can be performed by a programmable processor executing a program of instructions to perform functions by operating on input data and generating output.

Such a computer program may be provided on a data carrier, such as a CD-ROM or diskette, stored with data loadable in a memory of a computer system, the data representing the computer program. A data carrier may further comprise a data connection, such as a telephone cable or a wireless connection transmitting signals representing a computer program according to the invention

The invention may also be implemented in an article of manufacture with a computer usable medium having computer readable instructions embodied therein for providing access to resources available on that computer, the computer readable instructions comprising instructions to cause the computer to perform (a part of) a method according to the invention.

It should be noted that the above-mentioned embodiments illustrate rather than limit the invention, and that those skilled in the art will be able to design alternatives without departing from the scope of the appended claims. In the claims, any reference signs placed between parentheses shall not be construed as limiting the claim. The word 'comprising' does not exclude the presence of other elements or steps than those listed in a claim. The mere fact that certain measures are recited in mutually different claims does not indicate that a combination of these measures cannot be used to advantage.

## Claims

1. A method of displaying data at a graphical interface (200), the method comprising:
displaying a table pattern (100) of original cells (130) at the graphical interface (200); and
in response to selecting a control of at least one of the original cells (130): expanding said table pattern (100) with at least one additional cell (140-145,160,170) and
displaying data related to at least one of said selected original cells (130) in at least one of said additional cells (140-145,160,170).

2. The method of claim 1, further comprising:
in response to selecting at least one of the additional cells (140-145,160,170):
expanding said table pattern (100) with at least one further additional cell (150) and displaying data (151) related to at least one of said selected additional cells (145,160,170) in at least one of said further additional cells (150).

3. The method of any one of the preceding claims, wherein in the original cells (130) data categorised in a first level is represented, and in the additional cells (140-145, 160, 170) data categorised in a second level is represented, which second level is a sub-level of said first level.

4. The method claimed in claim 3, wherein in the selected original cells an identifier of a group of objects is represented, and in at least one of said additional cells an identifier of an object in said group is represented.

5. The method of claim 4, wherein in at least one of said additional cells (141-145, 160, 170) data is displayed, which is associated with an aspect of an object which identifier is represented.

6. The method of any one of the preceding claims, further comprising:
reducing the table pattern (100) in size in response to activating a reduction control; and
displaying an aggregated representation of the table.

7. The method of any one of the preceding claims, further comprising:
displaying in response to selecting an active cell a link corresponding to an application or user selectable action.

8. The method as claimed in any one of the preceding claim, wherein after said expanding, the data in an additional cell is controlled by selecting an original cell.

9. A computer system, comprising:
a display device for displaying a graphical interface (200); and
a processor communicatively connected to the display device, which processor is capable of displaying a table pattern (100) of original cells (130) in a display area of the graphical interface (200); and capable of expanding said table pattern (100) with at least one additional cell and displaying data related to the selected original cells (130) in at least one of said additional cells in response to selecting at least one of said original cells (130).

10. A computer program product, comprising program code portions for performing a method as claimed in any one of claims 1-8 when run on a programmable apparatus.
